# EUROPEAN PATENT APPLICATION

(11) **EP 4 831 521 A1**
(43) Date of publication of application: **28.10.2026**
(21) Application number: 24926905.1
(22) Date of filing: 23.12.2024
(51) Int. Cl.: F16L 5/14, F16L 5/02, H01M 10/613

(54) **BATTERY AND ELECTRIC DEVICE**

(30) Priority: 28.02.2024 CN 202410221677
(71) Applicant: Contemporary Amperex Technology Co., Limited, Ningde, Fujian 352100 (CN)
(72) Inventor: ZHAI, Xuan, Ningde, Fujian 352100 (CN); ZHOU, Cong, Ningde, Fujian 352100 (CN); HUANG, Xiaoteng, Ningde, Fujian 352100 (CN); LI, Xingxing, Ningde, Fujian 352100 (CN); WANG, Qing, Ningde, Fujian 352100 (CN)
(74) Representative: Lorenz Seidler Gossel Part. mbB
(86) International application number: PCT/CN2024/141515
(87) International publication number: WO 2025/180047

(57) **Abstract**

A battery (100) and an electric device are provided. The battery (100) includes a mounting portion (1) and a flange structure (2). The mounting portion (1) is provided with a mounting hole. The flange structure (2) includes a first connecting portion (21a), a first sealing member (22), and a second sealing member (23). The first connecting portion (21a) is movably disposed in the mounting hole. The first sealing member (22) is sleeved on a periphery of the first connecting portion (21a), and the first sealing member (22) is connected to the mounting portion (1). The second sealing member (23) is sleeved on the periphery of the first connecting portion (21a), and the second sealing member (23) cooperates with the first sealing member (22) to enhance a sealing effect between the first sealing member (22) and the first connecting portion (21a). The electric device includes the battery (100).

## Description

This disclosure is based on and claims priority to the Chinese Application No. 202410221677.1, filed on February 28, 2024, which is incorporated herein by reference in its entirety.

### TECHNICAL FIELD

This disclosure relates to the field of battery technology, and in particular, to a battery and an electric device.

### BACKGROUND

Energy conservation and emission reduction are crucial to sustainable development of the automobile industry. Electric vehicles, with their advantages in energy conservation and environmental protection, have become an important part of sustainable development of the automobile industry. For electric vehicles, battery technology is an important factor in connection with their development.

During use of a battery, a large amount of heat is released. To control the temperature of the battery, a cooling liquid needs to be input into the battery. The sealing performance at a connection position between the battery and a delivery pipe is a key factor affecting the battery performance.

The above statements are only provided to offer background technical information related to this disclosure and do not necessarily constitute prior art.

### SUMMARY

This disclosure provides a battery and an electric device, which can effectively improve a sealing effect between a first sealing member and a first connecting portion.

According to a first aspect, this disclosure provides a battery including a mounting portion and a flange structure, where the mounting portion is provided with a mounting hole; the flange structure includes a first connecting portion, a first sealing member, and a second sealing member; the first connecting portion is movably disposed in the mounting hole; the first sealing member is sleeved on a periphery of the first connecting portion, and the first sealing member is connected to the mounting portion; and the second sealing member is sleeved on the periphery of the first connecting portion, and the second sealing member cooperates with the first sealing member to enhance the sealing effect between the first sealing member and the first connecting portion.

The provision of the second sealing member can enhance the sealing effect between the first sealing member and the first connecting portion, thereby improving the overall sealing performance of the flange structure and reducing the risk of leakage.

In some embodiments, the first sealing member includes a first sealing portion, and the first sealing portion is in interference fit with the first connecting portion.

The first sealing portion is configured to be in interference fit with the first connecting portion, so that the sealing performance between the first sealing member and the first connecting portion can be improved, thereby preventing leakage.

In some embodiments, the first sealing member includes a first sealing portion, a protruding portion is provided on the periphery of the first connecting portion, and the first sealing portion is in interference fit with the protruding portion.

The provision of the protruding portion on the periphery of the first connecting portion allows the first sealing member to be sealed with the first connecting portion through the interference fit between the first sealing portion and the protruding portion, thereby improving the sealing effect.

In some embodiments, the second sealing member includes a second sealing portion, and the second sealing portion is in interference fit with the first connecting portion.

The second sealing portion is configured to be in interference fit with the first connecting portion, so that the second sealing member is hermetically connected to the first connecting portion.

In some embodiments, the second sealing member includes a second sealing portion, and the second sealing portion is welded to the first connecting portion.

The second sealing portion is configured to be welded to the first connecting portion, so that the sealing effect and connection stability between the second sealing member and the first connecting portion can be enhanced. On the basis of the cooperation between the second sealing member and the first sealing member, the sealing effect between the first sealing member and the first connecting portion can be further improved.

In some embodiments, the first sealing member is provided with an accommodating groove, the second sealing member includes an insertion portion, and the insertion portion is inserted into the accommodating groove.

The accommodating groove is provided on the first sealing member, and the insertion portion is provided on the second sealing member, so that the cooperation between the first sealing member and the second sealing member can be achieved by inserting the insertion portion into the accommodating groove.

In some embodiments, the accommodating groove includes a first accommodating portion and a second accommodating portion; the insertion portion includes a first insertion portion and a second insertion portion; the first insertion portion is inserted into the first accommodating portion; and the second insertion portion is inserted into the second accommodating portion.

The provision of two insertion portions and two corresponding accommodating grooves can further improve the reliability of the cooperation between the insertion portions and the accommodating grooves, thereby reducing the risk of the first sealing member and the second sealing member disengaging from each other.

In some embodiments, a preset included angle is provided between the first accommodating portion and the second accommodating portion, and a preset included angle is provided between the first insertion portion and the second insertion portion.

The preset included angles are provided between the first accommodating portion and the second accommodating portion and between the first insertion portion and the second insertion portion, so that the difficulty of disengagement between the first sealing member and the second sealing member can be increased, thereby improving the reliability of the cooperation between the first sealing member and the second sealing member.

In some embodiments, the first accommodating portion and the second accommodating portion are perpendicular to each other, and the first insertion portion and the second insertion portion are perpendicular to each other.

The first accommodating portion and the second accommodating portion are configured to be perpendicular to each other, and the first insertion portion and the second insertion portion are configured to be perpendicular to each other, so that a direction in which the first insertion portion disengages from the first accommodating portion is perpendicular to a direction in which the second insertion portion disengages from the second accommodating portion, thereby increasing the difficulty of disengagement between the first sealing member and the second sealing member, and improving the reliability of the cooperation between the first sealing member and the second sealing member.

In some embodiments, the first accommodating portion and the first insertion portion both extend along a radial direction of the first connecting portion, and the second accommodating portion and the second insertion portion both extend along an axial direction of the first connecting portion.

The first accommodating portion and the first insertion portion are configured to both extend along the radial direction of the first connecting portion, and the second accommodating portion and the second insertion portion are configured to both extend along the axial direction of the first connecting portion, so that the direction in which the first insertion portion disengages from the first accommodating portion is perpendicular to the direction in which the second insertion portion disengages from the second accommodating portion, thereby effectively increasing the difficulty of disengagement between the first sealing member and the second sealing member, and improving the reliability of the cooperation between the first sealing member and the second sealing member.

In some embodiments, the second sealing member includes a first pressing portion, where the first pressing portion is sleeved on a periphery of the first sealing member, and the first pressing portion is configured to enable the first sealing member to abut against the first connecting portion along an axial direction and/or a radial direction of the first connecting portion.

The first pressing portion is provided, so that pressure can be applied to the first sealing member to enable the first sealing member to abut against the first connecting portion along the axial direction and/or the radial direction of the first connecting portion, thereby improving the sealing effect between the first sealing member and the first connecting portion in the axial direction and/or the radial direction.

In some embodiments, the first pressing portion includes a first mating surface inclined relative to the axial direction of the first connecting portion; the first sealing member includes a second mating surface inclined relative to the axial direction of the first connecting portion; and the first mating surface is in contact with the second mating surface.

The first mating surface and the second mating surface inclined relative to the axis of the first connecting portion are provided, and the first mating surface is enabled to be in contact with the second mating surface, and the first pressing portion is sleeved on the periphery of the first sealing member, so that the first mating surface can apply pressure to the second mating surface in both the axial direction and the radial direction, thereby enabling the first sealing member to abut against the first connecting portion along the axial direction and the radial direction of the first connecting portion, and effectively improving the sealing effect between the first sealing member and the second sealing member.

In some embodiments, the first connecting portion includes a first connecting section and a protruding portion, where the protruding portion protrudes outward along a radial direction relative to an outer surface of the first connecting section to form a step surface; the first sealing member includes a first sealing surface and a second sealing surface; and the first pressing portion is configured to press the first sealing surface against the step surface and/or press the second sealing surface against the outer surface of the first connecting section.

The protruding portion protruding relative to the first connecting section is provided, so that the step surface can be formed. In addition, the first sealing surface and the second sealing surface are both provided on the first sealing member, so that the pressure applied by the first pressing portion to the first sealing member can be further transmitted to the first sealing surface and the second sealing surface, thereby pressing the first sealing surface against the step surface and/or pressing the second sealing surface against the outer surface of the first connecting section, and achieving sealing between the two sealing surfaces.

In some embodiments, the second sealing member includes a second pressing portion, and the second pressing portion is configured to enable the first sealing member to abut against the first connecting portion along an axial direction of the first connecting portion.

The provision of the second pressing portion can enable the first sealing member to abut against the first connecting portion along the axial direction of the first connecting portion, thereby achieving sealing between the first sealing member and the first connecting portion in the axial direction.

In some embodiments, the second pressing portion includes a third mating surface perpendicular to an axis of the first connecting portion; the first sealing member includes a fourth mating surface perpendicular to the axis of the first connecting portion; and the third mating surface is in contact with the fourth mating surface.

The third mating surface and the fourth mating surface are provided, so that under the action of the second pressing portion, the third mating surface can be in close contact with the fourth mating surface, thereby achieving axial sealing between the first sealing member and the second sealing member.

In some embodiments, the first connecting portion includes a first connecting section and a protruding portion, where the protruding portion protrudes outward along a radial direction relative to an outer surface of the first connecting section to form a step surface; the first sealing member includes a first sealing surface; and the second pressing portion is configured to press the first sealing surface against the step surface.

The first sealing surface and the step surface are provided, so that the pressure applied by the second pressing portion to the fourth mating surface can be further transmitted to the first sealing surface, thereby pressing the first sealing surface against the step surface, and achieving sealing between the first sealing member and the first connecting portion in the axial direction.

According to a second aspect, this disclosure provides an electric device including the foregoing battery, where the battery is configured to supply electrical energy to the electric device.

The foregoing description is merely an overview of the technical solutions of this disclosure. For a better understanding of the technical means in this disclosure such that they can be implemented according to the content of the specification, and to make the above and other objectives, features, and advantages of this disclosure more obvious and easier to understand, the following describes specific embodiments of this disclosure.

### BRIEF DESCRIPTION OF DRAWINGS

To more clearly illustrate the technical solutions of the embodiments of this disclosure, the accompanying drawings to be used in the embodiments of this disclosure will be briefly described below. Apparently, the accompanying drawings described below are only some embodiments of this disclosure. For those of ordinary skill in the art, other accompanying drawings can be obtained based on these drawings without creative efforts.
FIG. 1 is a schematic structural diagram of a battery according to some embodiments of this disclosure.
FIG. 2 is an enlarged view of a part indicated by reference sign A in FIG. 1.
FIG. 3 is a partially enlarged view after a part of a structure shown in FIG. 2 is hidden.
FIG. 4 is a schematic structural diagram of a flange structure of a battery according to some embodiments of this disclosure.
FIG. 5 is an exploded view of a flange structure of a battery according to some embodiments of this disclosure.
FIG. 6 is a cross-sectional view of a flange structure of a battery according to some embodiments of this disclosure.
FIG. 7 is an enlarged view of a portion indicated by reference sign B in FIG. 6.
FIG. 8 is a cross-sectional view of a partial structure of a battery according to some embodiments of this disclosure.
FIG. 9 is a schematic structural diagram of a flange structure of a battery according to some other embodiments of this disclosure.
FIG. 10 is an exploded view of a flange structure of a battery according to some other embodiments of this disclosure.
FIG. 11 is a cross-sectional view of a flange structure of a battery according to some other embodiments of this disclosure.
FIG. 12 is an enlarged view of a portion indicated by reference sign C in FIG. 11.
FIG. 13 is a cross-sectional view of a partial structure of a battery according to some other embodiments of this disclosure.

In the accompanying drawings, the accompanying drawings are not drawn to actual scale.

### Reference signs:

100. battery;
1. mounting portion; 2. flange structure; 3. first side wall; 4. second side wall;
21. first connecting portion; 22. first sealing member; 23. second sealing member; 24. first connecting member; 25. second connecting member; 251. bolt; 252. nut; 26. sleeve; 27. sealing ring;
21a. first connecting portion; 21b. second connecting portion; 211. first connecting section; 2111. outer surface; 212. protruding portion; 2121. step surface; 213. second connecting section; 214. first limiting portion; 215. first connecting hole;
221. support frame; 222. first sealing portion; 2221. first accommodating portion; 2222. second accommodating portion; 2223. second mating surface; 2224. fourth mating surface; 2225. first sealing surface; 2226. second sealing surface; 223. second limiting portion; 224. second connecting hole;
230. welding portion; 231. second sealing portion; 232. first insertion portion; 233. second insertion portion; 234. first pressing portion; 2341. first mating surface; 235. second pressing portion; and 2351. third mating surface.

### DESCRIPTION OF EMBODIMENTS

The embodiments of the technical solutions of this disclosure will be described in detail below with reference to the accompanying drawings. The following embodiments are only used to more clearly illustrate the technical solutions of this disclosure and are therefore only exemplary, and cannot be used to limit the protection scope of this disclosure.

Unless otherwise defined, all technical and scientific terms used herein have the same meaning as commonly understood by those skilled in the art to which this disclosure belongs. The terms used herein are only for the purpose of describing specific embodiments and are not intended to limit this disclosure. The terms "include", "comprise", "have", and any variations thereof in the specification, claims, and above description of the accompanying drawings of this disclosure are intended to cover non-exclusive inclusions.

In the description of the embodiments of this disclosure, technical terms such as "first" and "second" are only used to distinguish different objects and should not be understood as indicating or implying relative importance or implicitly indicating the number, specific order, or primary-secondary relationship of the indicated technical features. In addition, the term "perpendicular" is not strictly perpendicular but within the allowable range of errors. "Parallel" is not strictly parallel but within the allowable range of errors.

Reference to "embodiment" in the specification means that specific features, structures, or characteristics described with reference to an embodiment may be included in at least one embodiment of this disclosure. The word "embodiment" appearing in various places in this specification does not necessarily refer to the same embodiment or an independent or alternative embodiment that is exclusive of other embodiments. Those skilled in the art explicitly and implicitly understand that some embodiments described herein may be combined with other embodiments.

In the description of the embodiments of this disclosure, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between the contextually associated objects.

In the description of the embodiments of this disclosure, "a plurality of" means at least two, unless otherwise specifically defined. Similarly, "a plurality of groups" refers to two or more groups, and "a plurality of pieces" refers to two or more pieces, unless specifically defined otherwise.

In the description of the embodiments of this disclosure, the orientations or positional relationships indicated by technical terms such as "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", and "circumferential" and the like are based on the orientations or positional relationships as shown in the accompanying drawings. These terms are merely for ease and brevity of description of the embodiments of this disclosure rather than indicating or implying that the means or components mentioned must have specific orientations or must be constructed or manipulated according to specific orientations, and therefore shall not be construed as any limitations on the embodiments of this disclosure.

In the description of the embodiments of this disclosure, unless otherwise expressly specified and limited, the technical terms "mounting", "connection", "join", and "fastening" should be understood in their general senses. For example, they may refer to a fixed connection, a detachable connection, or an integral connection, may refer to a mechanical connection or electrical connection, and may refer to a direct connection, an indirect connection via an intermediate medium, an internal communication between two elements, or an interaction between two elements. For those of ordinary skill in the art, the specific meanings of the above terms in the embodiments of this disclosure can be understood according to specific circumstances.

Currently, from the perspective of market development, application of traction batteries is being more extensive. Traction batteries have been not only used in energy storage power supply systems such as hydroelectric power plants, thermal power plants, wind power plants, and solar power plants, but also widely used in many other fields including electric transportation tools such as electric bicycles, electric motorcycles, and electric vehicles, military equipment, and aerospace. With the continuous expansion of application fields of traction batteries, market demands for traction batteries are also increasing.

With the continuous increase in the demand for traction batteries, the requirements for the overall performance of traction batteries are also continuously improving. During the use of the battery, as charging and discharging continue, a large amount of heat is released. If the temperature of the battery is not controlled after the heat is released, the chemical reactions inside the battery are accelerated, and a large amount of gas is generated in a short time, causing excessive internal pressure of the battery, leading to a high risk of explosion, affecting the safety of components during use, and shortening the service life of the components.

To cool the battery in a timely manner, a method of delivering a cooling liquid into the battery can be used. The cooling liquid is used to exchange heat with the battery for cooling. For this purpose, a flange structure needs to be provided to connect water inlet and outlet nozzles of the battery to mating parts for delivering the cooling liquid, so that the inside and outside of the battery are connected, and the cooling liquid is delivered to the inside of the battery.

When a liquid inlet and a liquid outlet of the battery are assembled with the whole vehicle, the mating parts connected to the water inlet and outlet nozzles need to be aligned with the axes of the water inlet and outlet nozzles and then inserted. However, some mating parts may have manufacturing or assembly errors, and radial forces are generated after the mating parts are assembled with the water inlet and outlet nozzles.

A sealing method between the mating parts and the water inlet and outlet nozzles can adopt radial sealing. If the mating parts and the water inlet and outlet nozzles are subjected to radial forces for a long time, there are two risks: first, the nozzles are subjected to long-term force and have the risks of deformation and damage; and if the nozzles are ruptured, the sealing failure of a water cooling system is caused; second, sealing rings can also be used between the mating parts and the water inlet and outlet nozzles to further strengthen the radial sealing. The situation of radial force makes compression amount of the sealing ring uneven, a compression ratio of the sealing ring in a force direction is large, and a compression ratio in an opposite direction is small, so there is a risk of leakage in the opposite direction.

To alleviate the radial force and solve the stress problem caused by manufacturing or assembly errors, a floating flange structure can be used to connect the mating parts and the water inlet and outlet nozzles, so that the water inlet and outlet nozzles have a certain radial floating space when connected to the mating parts, thereby effectively solving the radial force problem caused by manufacturing or assembly errors. The floating flange structure needs to have both the function of floating connection and the function of maintaining the sealing between inner and outer interfaces at a connection position.

In the process of floating connection, to overcome manufacturing or assembly errors and align the water inlet and outlet nozzles with the mating parts, an eccentric force is generated, and the force can pull the floating flange structure and damage the sealing effect between a first sealing member and a first connecting portion in the floating flange structure. Therefore, this disclosure provides a battery. The battery includes a flange structure. The flange structure includes a first connecting portion, a first sealing member, and a second sealing member. Through the cooperation of the second sealing member and the first sealing member, the sealing effect between the first sealing member and the first connecting portion is further enhanced.

In the embodiments of this disclosure, the provision of the second sealing member enhances the sealing effect between the first sealing member and the first connecting portion, thereby improving the overall sealing performance of the flange structure and preventing the sealing effect from being reduced due to the eccentric force during the floating connection process.

The battery disclosed in the embodiments of this disclosure may be used in, but is not limited to, electric devices such as vehicles, ships, or aircraft. A power supply system of the electric device can be formed by the battery disclosed in this disclosure, which can effectively improve the sealing performance at connection positions between the water inlet and outlet nozzles of the battery and the mating parts, thereby reducing the risk of leakage.

An embodiment of this disclosure provides an electric device using a battery as a power supply, where the battery is configured to supply electrical energy to the electric device. The electric device may be, but is not limited to, a mobile phone, a portable device, a notebook computer, an electric bicycle, an electric vehicle, a ship, a spacecraft, an electric toy, an electric tool, or the like. For example, the spacecraft includes an airplane, a rocket, a space shuttle, a spaceship, and the like. The electric toy includes a fixed or mobile electric toy, for example, a game console, an electric toy car, an electric toy ship, or an electric toy airplane. The electric tool includes an electric metal cutting tool, an electric grinding tool, an electric assembly tool, and an electric railway-specific tool, for example, an electric drill, an electric grinder, an electric wrench, an electric screwdriver, an electric hammer, an electric impact drill, a concrete vibrator, and an electric planer.

The embodiments of the battery provided by this disclosure are described in detail below.

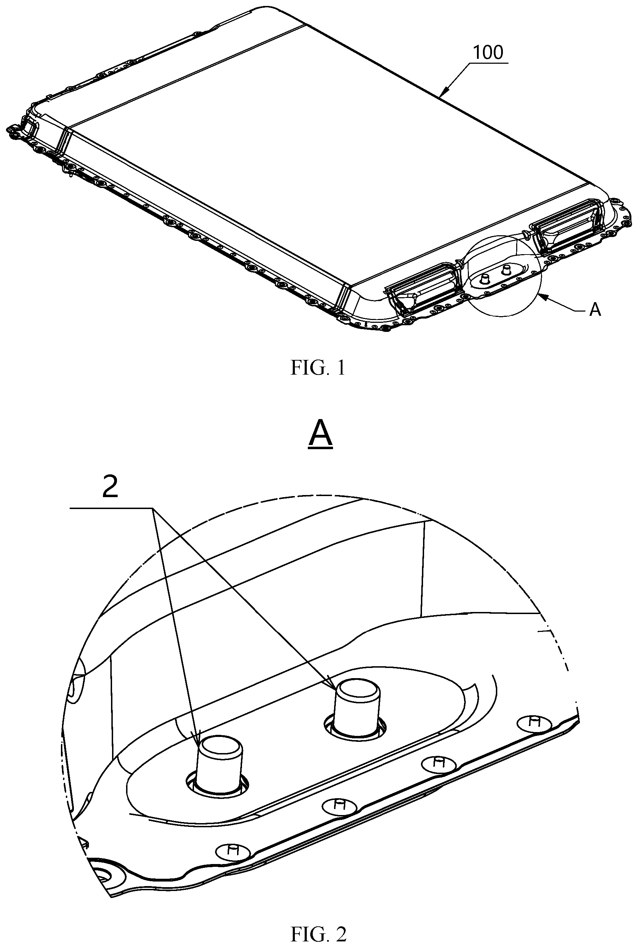

Referring to FIG. 1 to FIG. 3, in some embodiments of the battery provided by this disclosure, the battery 100 includes a mounting portion 1 and a flange structure 2. The mounting portion 1 is provided with a mounting hole. The flange structure 2 includes a first connecting portion 21a, a first sealing member 22, and a second sealing member 23. The first connecting portion 21a is movably disposed in the mounting hole. The first sealing member 22 is sleeved on a periphery of the first connecting portion 21a, and the first sealing member 22 is connected to the mounting portion 1. The second sealing member 23 is sleeved on the periphery of the first connecting portion 21a, and the second sealing member 23 cooperates with the first sealing member 22 to enhance the sealing effect between the first sealing member 22 and the first connecting portion 21a.

The provision of the second sealing member 23 can enhance the sealing effect between the first sealing member 22 and the first connecting portion 21a, thereby improving the overall sealing performance of the flange structure and reducing the risk of leakage.

In the embodiments of the present invention, the flange structure 2 is mounted on the mounting portion 1. The mounting portion 1 is configured to support the flange structure 2. The mounting portion 1 may be a housing of the battery or a mounting plate located inside the housing.

The mounting hole provided on the mounting portion 1 may be circular, square, or of other shapes.

The first connecting portion 21a is movably disposed in the mounting hole, so that the first connecting portion 21a has a movable space relative to the mounting portion 1. When water inlet and outlet nozzles are aligned with mating parts, manufacturing or assembly errors can be overcome through the movement of the first connecting portion 21a relative to the mounting portion 1, reducing radial forces on the water inlet and outlet nozzles and the mating parts, and improving the connection stability between the water inlet and outlet nozzles and the mating parts.

In the embodiments of the present invention, a plurality of implementation manners may be provided for enhancing the sealing effect between the first sealing member 22 and the first connecting portion 21a through the second sealing member 23.

In some embodiments, the sealing capability between the second sealing member 23 and the first connecting portion 21a can be enhanced, and the sealing capability is transferred to between the first sealing member 22 and the first connecting portion 21a through the cooperation of the second sealing member 23 and the first sealing member 22, so that the sealing capability between the first sealing member 22 and the first connecting portion 21a is not easily damaged.

In some other embodiments, a cooperation manner between the first sealing member 22 and the second sealing member 23 can be improved to directly improve the sealing capability between the first sealing member 22 and the first connecting portion 21a through the second sealing member 23.

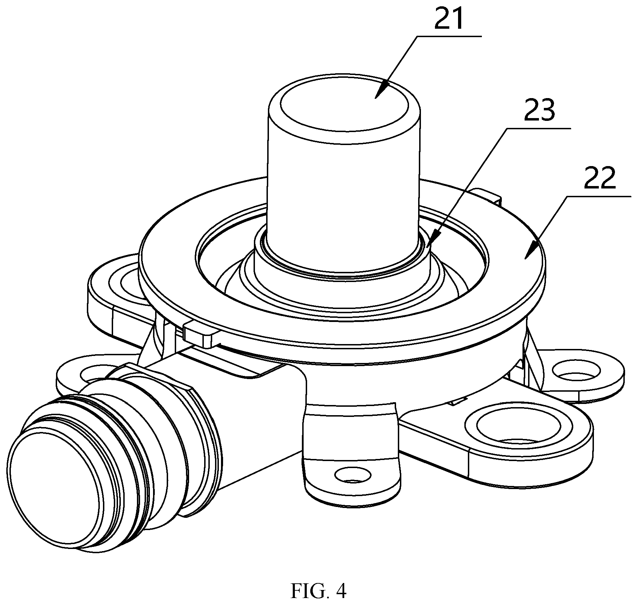

As shown in FIG. 4 to FIG. 8, in some embodiments, the first sealing member 22 includes a first sealing portion 222, and the first sealing portion 222 is in interference fit with the first connecting portion 21a.

The first sealing portion 222 is configured to be in interference fit with the first connecting portion 21a, so that the sealing performance between the first sealing member 22 and the first connecting portion 21a can be improved, thereby preventing leakage.

In some embodiments, the first sealing member 22 includes a first sealing portion 222. A protruding portion 212 is provided on the periphery of the first connecting portion 21a. The first sealing portion 222 is in interference fit with the protruding portion 212.

The provision of the protruding portion 212 on the periphery of the first connecting portion 21a allows the first sealing member 22 to be sealed with the first connecting portion 21a through the interference fit between the first sealing portion 222 and the protruding portion 212, thereby improving the sealing effect.

The provision of the protruding portion 212 can reduce sizes of other portions of the first connecting portion 21a, thereby facilitating the assembly of the first sealing member 22 and the first connecting portion 21a.

In some embodiments, the protruding portion 212 can be provided in an annular shape along a circumferential direction of the first connecting portion 21a to achieve full sealing in the circumferential direction.

In some embodiments, an end of the protruding portion 212 away from the first connecting portion 21a is arc-shaped. This shape facilitates the assembly of the first sealing member 22 and the first connecting portion 21a and is conducive to achieving the interference fit between the first sealing portion 222 and the protruding portion 212 through extrusion deformation.

In some embodiments, the second sealing member 23 includes a second sealing portion 231, and the second sealing portion 231 is in interference fit with the first connecting portion 21a.

The second sealing portion 231 is configured to be in interference fit with the first connecting portion 21a, so that the second sealing member 23 is hermetically connected to the first connecting portion 21a.

In the embodiments where the first sealing portion 222 of the first sealing member 22 is in interference fit with the first connecting portion 21a, and the second sealing portion 231 of the second sealing member 23 is in interference fit with the first connecting portion 21a, there are two seals in the flange structure 2, thereby greatly improving the overall sealing performance of the flange structure 2.

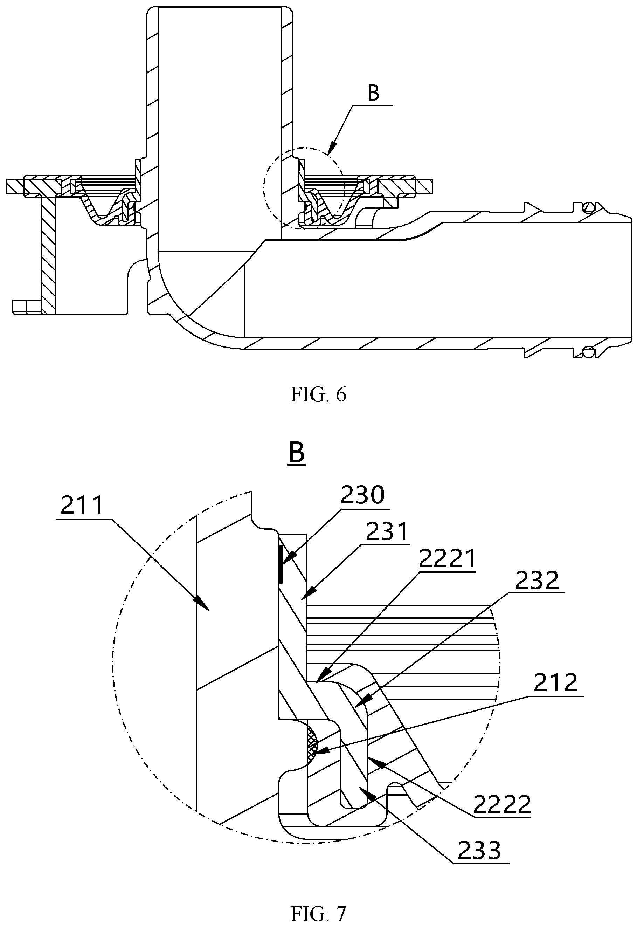

As shown in FIG. 7, in some embodiments, the second sealing member 23 includes a second sealing portion 231, and the second sealing portion 231 is welded to the first connecting portion 21a.

The second sealing portion 231 is configured to be welded to the first connecting portion 21a, so that the sealing effect and connection stability between the second sealing member 23 and the first connecting portion 21a can be enhanced. On the basis of the cooperation between the second sealing member 23 and the first sealing member 22, the sealing effect between the first sealing member 22 and the first connecting portion 21a can be further improved.

In the above embodiments, the sealing effect between the first sealing member 22 and the first connecting portion 21a is indirectly improved by the manner of enhancing the sealing effect and connection stability between the second sealing portion 231 and the first connecting portion 21a.

In the embodiments where the first sealing portion 222 of the first sealing member 22 is in interference fit with the first connecting portion 21a, and the second sealing portion 231 of the second sealing member 23 is welded to the first connecting portion 21a, there are two seals in the flange structure 2. Even if the sealing between the first sealing member 22 and the first connecting portion 21a is damaged and the sealing effect deteriorates, the welded connection between the second sealing portion 231 of the second sealing member 23 and the first connecting portion 21a can still provide a good sealing effect, thereby maintaining the overall sealing effect of the flange structure 2 and preventing leakage.

A plurality of manners may be provided for implementing cooperation between the second sealing member 23 and the first sealing member 22.

In some embodiments, the first sealing member 22 is provided with an accommodating groove. The second sealing member 23 includes an insertion portion. The insertion portion is inserted into the accommodating groove.

The accommodating groove is provided on the first sealing member 22, and the insertion portion is provided on the second sealing member 23, so that the cooperation between the first sealing member 22 and the second sealing member 23 can be achieved by inserting the insertion portion into the accommodating groove.

To achieve the cooperation between the first sealing member 22 and the second sealing member 23, inserting the insertion portion into the accommodating groove can improve the convenience of operation and simplify the cooperation structure.

In some embodiments, the accommodating groove includes a first accommodating portion 2221 and a second accommodating portion 2222. The insertion portion includes a first insertion portion 232 and a second insertion portion 233. The first insertion portion 232 is inserted into the first accommodating portion 2221. The second insertion portion 233 is inserted into the second accommodating portion 2222.

The provision of two insertion portions and two corresponding accommodating grooves can further improve the reliability of the cooperation between the insertion portions and the accommodating grooves, thereby reducing the risk of the first sealing member 22 and the second sealing member 23 disengaging from each other.

In some embodiments, a preset included angle is provided between the first accommodating portion 2221 and the second accommodating portion 2222. A preset included angle is provided between the first insertion portion 232 and the second insertion portion 233.

The preset included angles are provided between the first accommodating portion 2221 and the second accommodating portion 2222 and between the first insertion portion 232 and the second insertion portion 233, so that the difficulty of disengagement between the first sealing member 22 and the second sealing member 23 can be increased, thereby improving the reliability of the cooperation between the first sealing member 22 and the second sealing member 23.

In some embodiments, the first accommodating portion 2221 and the second accommodating portion 2222 are perpendicular to each other. The first insertion portion 232 and the second insertion portion 233 are perpendicular to each other.

The first accommodating portion 2221 and the second accommodating portion 2222 are configured to be perpendicular to each other, and the first insertion portion 232 and the second insertion portion 233 are configured to be perpendicular to each other, so that a direction in which the first insertion portion 232 disengages from the first accommodating portion 2221 is perpendicular to a direction in which the second insertion portion 233 disengages from the second accommodating portion 2222, thereby increasing the difficulty of disengagement between the first sealing member 22 and the second sealing member 23, and improving the reliability of the cooperation between the first sealing member 22 and the second sealing member 23.

In some embodiments, the first accommodating portion 2221 and the first insertion portion 232 both extend along a radial direction of the first connecting portion 21a. The second accommodating portion 2222 and the second insertion portion 233 both extend along an axial direction of the first connecting portion 21a.

The first accommodating portion 2221 and the first insertion portion 232 are configured to both extend along the radial direction of the first connecting portion 21a, and the second accommodating portion 2222 and the second insertion portion 233 are configured to both extend along the axial direction of the first connecting portion 21a, so that the direction in which the first insertion portion 232 disengages from the first accommodating portion 2221 is perpendicular to the direction in which the second insertion portion 233 disengages from the second accommodating portion 2222, thereby effectively increasing the difficulty of disengagement between the first sealing member 22 and the second sealing member 23, and improving the reliability of the cooperation between the first sealing member 22 and the second sealing member 23.

In addition, the first accommodating portion 2221 and the first insertion portion 232 both extending along the radial direction of the first connecting portion 21a can improve the cooperation stability between the first sealing member 22 and the second sealing member 23 when the first sealing member 22 or the second sealing member 23 is subjected to an axial force; and the second accommodating portion 2222 and the second insertion portion 233 both extending along the axial direction of the first connecting portion 21a can improve the cooperation stability between the first sealing member 22 and the second sealing member 23 when the first sealing member 22 or the second sealing member 23 is subjected to a radial force.

In the above embodiments, the first accommodating portion 2221 and the first insertion portion 232 both extend along the radial direction of the first connecting portion 21a, and the second accommodating portion 2222 and the second insertion portion 233 both extend along the axial direction of the first connecting portion 21a. Therefore, the cooperation between the first sealing member 22 and the second sealing member 23 can resist both the axial force and the radial force, thereby greatly enhancing the cooperation stability and reliability between the first sealing member 22 and the second sealing member 23, and providing conditions for maintaining the sealing effect of the flange structure 2 through the sealing between the second sealing member 23 and the first connecting portion 21a when the sealing effect between the first sealing member 22 and the first connecting portion 21a deteriorates.

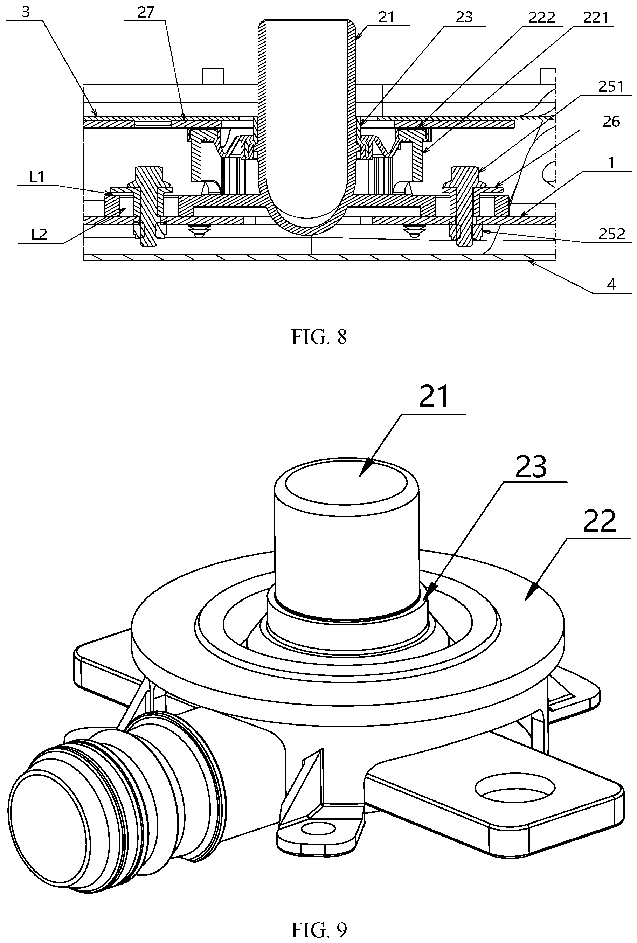

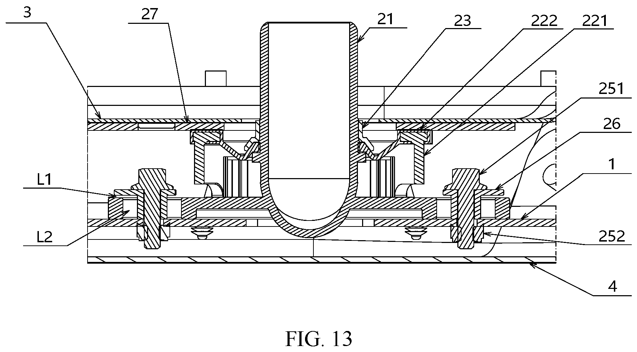

As shown in FIG. 9 to FIG. 13, in some embodiments, the second sealing member 23 includes a first pressing portion 234. The first pressing portion 234 is sleeved on a periphery of the first sealing member 22, and the first pressing portion 234 is configured to enable the first sealing member 22 to abut against the first connecting portion 21a along an axial direction and/or a radial direction of the first connecting portion 21a.

The first pressing portion 234 is provided, so that pressure can be applied to the first sealing member 22 to enable the first sealing member 22 to abut against the first connecting portion 21a along the axial direction and/or the radial direction of the first connecting portion 21a, thereby improving the sealing effect between the first sealing member 22 and the first connecting portion 21a in the axial direction and/or the radial direction.

In the above embodiments, directly applying pressure to the first sealing member 22 through the first pressing portion 234 enables the first sealing member 22 to abut against the first connecting portion 21a along the axial direction and/or the radial direction of the first connecting portion 21a, thereby directly improving the sealing effect between the first sealing member 22 and the first connecting portion 21a.

In the embodiments where the first pressing portion 234 is configured to enable the first sealing member 22 to abut against the first connecting portion 21a along both the axial direction and the radial direction of the first connecting portion 21a, the sealing effect between the first sealing member 22 and the first connecting portion 21a in both the axial direction and the radial direction can be enhanced.

In some embodiments, the first pressing portion 234 includes a first mating surface 2341 inclined relative to the axial direction of the first connecting portion 21a. The first sealing member 22 includes a second mating surface 2223 inclined relative to the axial direction of the first connecting portion 21a. The first mating surface 2341 is in contact with the second mating surface 2223.

The first mating surface 2341 and the second mating surface 2223 inclined relative to the axis of the first connecting portion 21a are provided, the first mating surface 2341 is in contact with the second mating surface 2223, and the first pressing portion 234 is sleeved on the periphery of the first sealing member 22, so that the first mating surface 2341 can apply pressure to the second mating surface 2223 in both the axial direction and the radial direction, thereby enabling the first sealing member 22 to abut against the first connecting portion 21a along the axial direction and the radial direction of the first connecting portion 21a, and effectively improving the sealing effect between the first sealing member 22 and the second sealing member 23.

In some embodiments, the first connecting portion 21a includes a first connecting section 211 and a protruding portion 212. The protruding portion 212 protrudes outward along a radial direction relative to an outer surface 2111 of the first connecting section 211 to form a step surface 2121. The first sealing member 22 includes a first sealing surface 2225 and a second sealing surface 2226. The first pressing portion 234 is configured to press the first sealing surface 2225 against the step surface 2121 and/or press the second sealing surface 2226 against the outer surface 2111 of the first connecting section 211.

The protruding portion 212 protruding relative to the first connecting section 211 is provided, so that the step surface 2121 can be formed. In addition, the first sealing surface 2225 and the second sealing surface 2226 are both provided on the first sealing member 22, so that the pressure applied by the first pressing portion 234 to the first sealing member 22 can be further transmitted to the first sealing surface 2225 and the second sealing surface 2226, thereby pressing the first sealing surface 2225 against the step surface 2121 and/or pressing the second sealing surface 2226 against the outer surface 2111 of the first connecting section 211, and achieving sealing between the two sealing surfaces.

In some embodiments, the first sealing surface 2225 and the step surface 2121 are both planes perpendicular to the axis of the first connecting portion 21a, so that axial sealing between the first sealing member 22 and the first connecting portion 21a is achieved through the contact between the first sealing surface 2225 and the step surface 2121.

In some embodiments, the second sealing surface 2226 and the outer surface 2111 of the first connecting section 211 are both annular surfaces arranged around the circumferential direction of the first connecting portion 21a, so that radial sealing between the first sealing member 22 and the first connecting portion 21a is achieved through the contact between the second sealing surface 2226 and the first connecting section 211.

In some embodiments, the second sealing member 23 includes a second pressing portion 235. The second pressing portion 235 is configured to enable the first sealing member 22 to abut against the first connecting portion 21a along an axial direction of the first connecting portion 21a.

The provision of the second pressing portion 235 can enable the first sealing member 22 to abut against the first connecting portion 21a along the axial direction of the first connecting portion 21a, thereby achieving sealing between the first sealing member 22 and the first connecting portion 21a in the axial direction.

In some embodiments, the second pressing portion 235 includes a third mating surface 2351 perpendicular to an axis of the first connecting portion 21a. The first sealing member 22 includes a fourth mating surface 2224 perpendicular to the axis of the first connecting portion 21a. The third mating surface 2351 is in contact with the fourth mating surface 2224.

The third mating surface 2351 and the fourth mating surface 2224 are provided, so that under the action of the second pressing portion 235, the third mating surface 2351 can be in close contact with the fourth mating surface 2224, thereby achieving axial sealing between the first sealing member 22 and the second sealing member 23.

In some embodiments, the first connecting portion 21a includes a first connecting section 211 and a protruding portion 212. The protruding portion 212 protrudes outward along a radial direction relative to an outer surface 2111 of the first connecting section 211 to form a step surface 2121. The first sealing member 22 includes a first sealing surface 2225. The second pressing portion 235 is configured to press the first sealing surface 2225 against the step surface 2121.

The first sealing surface 2225 and the step surface 2121 are provided, so that the pressure applied by the second pressing portion 235 to the fourth mating surface 2224 can be further transmitted to the first sealing surface 2225, thereby pressing the first sealing surface 2225 against the step surface 2121, and achieving sealing between the first sealing member 22 and the first connecting portion 21a in the axial direction.

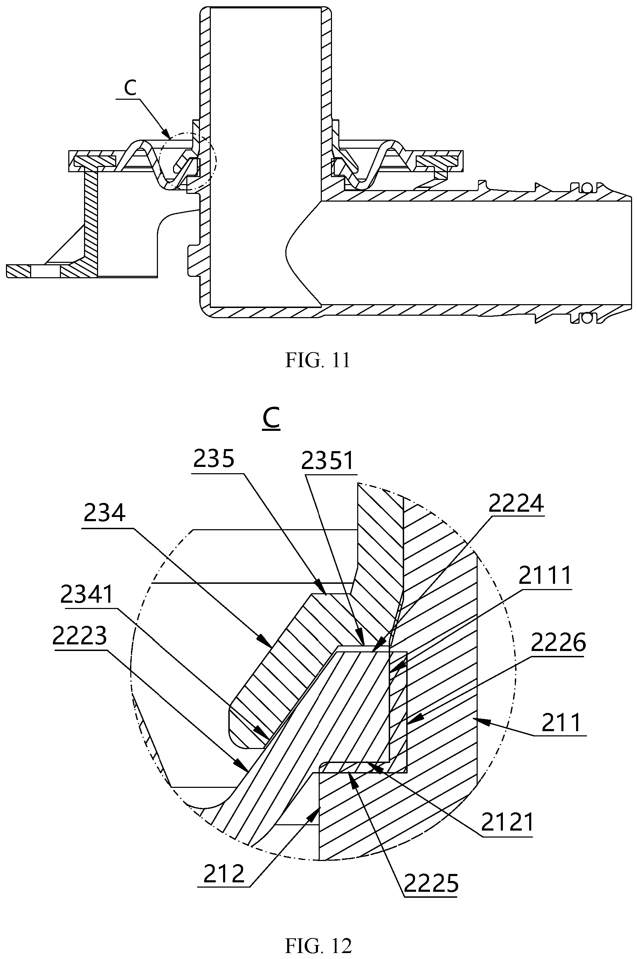

As shown in FIG. 12, in the embodiments where the second sealing member 23 includes both the first pressing portion 234 and the second pressing portion 235. Through the first pressing portion 234, the first sealing surface 2225 can be pressed against the step surface 2121, and the second sealing surface 2226 can be pressed against the outer surface 2111 of the first connecting section 211. Through the second pressing portion 235, the first sealing surface 2225 can be pressed against the step surface 2121, thereby effectively enhancing the sealing effect between the first sealing member 22 and the first connecting portion 21a in the axial direction and the radial direction.

It can be seen from FIG. 12 that the second sealing member 23 and the first connecting portion 21a form a substantially enclosed space for the first sealing member 22. During the floating connection process of the water inlet and outlet nozzles and the mating parts, the first sealing member 22 is subjected to the pressing action of the second sealing member 23 and remains fixed relative to the first connecting portion 21a. The first sealing member 22 cannot separate from the substantially enclosed space formed by the second sealing member 23 and the first connecting portion 21a, thereby effectively ensuring the sealing effect between the first sealing member 22 and the first connecting portion 21a.

Structures of some embodiments of the battery provided by this disclosure are described below with reference to FIG. 1 to FIG. 13.

As shown in FIG. 1, the battery 100 includes a housing. A plurality of battery modules are provided inside the housing. Each battery module includes a plurality of battery cells.

As shown in FIG. 2, an outlet of the flange structure 2 extends outside the housing of the battery 100. The outlet is in communication with a delivery pipe for delivering a cooling liquid to deliver the cooling liquid to the inside of the battery 100 so as to cool the battery 100.

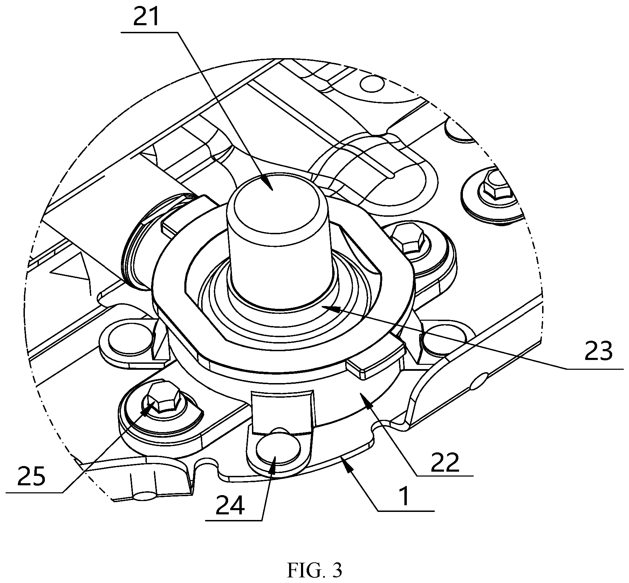

As shown in FIG. 3, after some shielding components are hidden, it can be seen that except for the outlet, most of the structures of the flange structure 2 are provided inside the housing of the battery 100, and an inlet of the flange structure 2 is in communication with the delivery pipe inside the battery 100 to deliver the cooling liquid to a position to be cooled inside the battery 100.

A mounting portion 1 is provided inside the battery 100, and the flange structure 2 is mounted on the mounting portion 1.

The flange structure 2 includes a connecting portion 21, a first sealing member 22, a second sealing member 23, a first connecting member 24, and a second connecting member 25.

The first sealing member 22 is sleeved on a periphery of the first connecting portion 21a, and the first sealing member 22 is connected to the mounting portion 1 through the first connecting member 24. The second sealing member 23 is sleeved on the periphery of the first connecting portion 21a, and the second sealing member 23 cooperates with the first sealing member 22. The first connecting portion 21a is connected to the mounting portion 1 through the second connecting member 25.

Two embodiments of the flange structure 2 are described below.

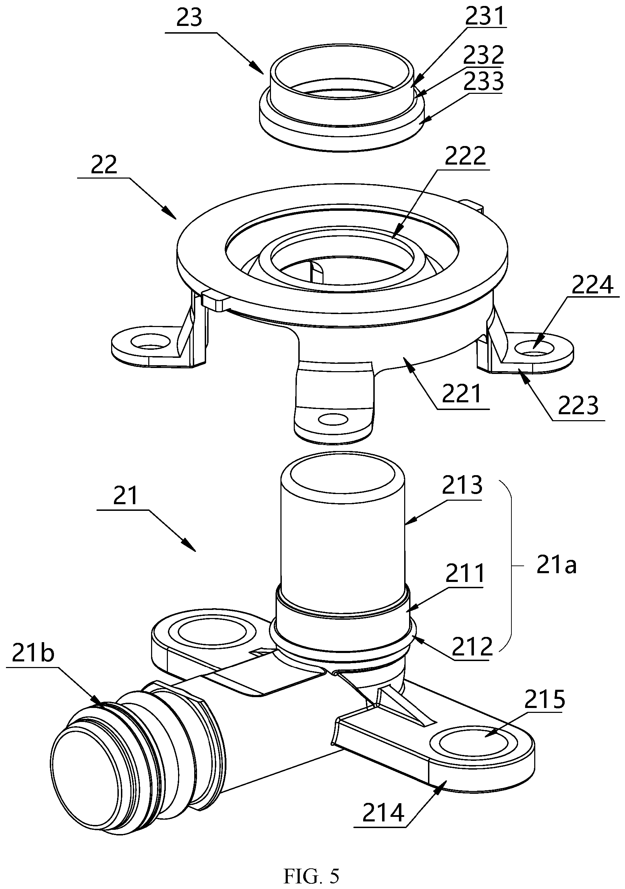

In a first embodiment shown in FIG. 4 to FIG. 8, as shown in FIG. 4 and FIG. 5, the connecting portion 21 includes a first connecting portion 21a and a second connecting portion 21b. The first connecting portion 21a includes a first connecting section 211, a protruding portion 212, and a second connecting section 213.

The protruding portion 212 protrudes outward relative to the first connecting section 211. The protruding portion 212 is in a circular ring shape.

The first connecting section 211 and the second connecting section 213 are both cylindrical. The second connecting section 213 is connected to a side of the first connecting section 211 away from the protruding portion 212, and a diameter of the second connecting section 213 is smaller than a diameter of the first connecting section 211. The diameter of the second connecting section 213 is set to be smaller than the diameter of the first connecting section 211, so that when the first sealing member 22 and the second sealing member 23 are sleeved on the first connecting portion 21a from the second connecting section 213, the fitting difficulty in an initial section can be reduced, and the assembly efficiency can be improved.

The second connecting portion 21b is connected to a side of the protruding portion 212 away from the first connecting section 211.

The axes of the first connecting section 211, the protruding portion 212, and the second connecting section 213 in the first connecting portion 21a are collinear. The first connecting portion 21a and the second connecting portion 21b are connected to form an L-shaped structure. The axis of the first connecting portion 21a extends along a first direction. The axis of the second connecting portion 21b extends along a second direction. The first direction and the second direction are perpendicular to each other. In other embodiments, an included angle between the first direction and the second direction may alternatively be an acute angle or an obtuse angle.

A flow channel is provided inside the flange structure 2 to achieve fluid communication between an inner delivery pipe and an external delivery pipe of the battery 100.

Flow channels are provided inside both the first connecting portion 21a and the second connecting portion 21b. An extension direction of the flow channel in the first connecting portion 21a is perpendicular to an extension direction of the flow channel in the second connecting portion 21b.

A first limiting portion 214 is provided on the first connecting portion 21a or at a connection position between the first connecting portion 21a and the second connecting portion 21b. The first limiting portion 214 is connected to the mounting portion 1, and the first limiting portion 214 is movable relative to the mounting portion 1 in a radial direction of the first connecting portion 21a.

The first limiting portion 214 is provided with a first connecting hole 215. The second connecting member 25 passes through the first connecting hole 215 and a third connecting hole provided on the mounting portion 1 to connect the first limiting portion 214 and the mounting portion 1.

As shown in FIG. 8, a diameter of the first connecting hole 215 is larger than a diameter of the second connecting member 25, so that in the radial direction of the first connecting portion 21a, the first limiting portion 214 is movable relative to the mounting portion 1.

The second connecting member 25 includes a bolt 251 and a nut 252. The bolt 251 passes through the first connecting hole 215 and the third connecting hole provided on the mounting portion 1. The nut 252 is mounted at an end of the bolt 251 and configured to axially limit the bolt 251.

The flange structure 2 further includes a sleeve 26. The sleeve 26 is mounted in the first connecting hole 215 and the third connecting hole provided on the mounting portion 1.

A diameter of the sleeve 26 is smaller than the diameter of the first connecting hole 215. A gap L2 is provided between an outer peripheral surface of the sleeve 26 and an inner wall surface of the first connecting hole 215, so that the first limiting portion 214 is movable relative to the mounting portion 1 in the radial direction of the first connecting portion 21a.

An end of the sleeve 26 away from the mounting portion 1 is provided with a blocking portion. The blocking portion is configured to axially limit the second connecting member 25. Specifically, a diameter of the blocking portion is larger than a diameter of the nut of the bolt 251 to limit the axial movement of the bolt 251.

An axial length of the sleeve 26 is greater than a height of the first limiting portion 214 along an axial direction of the first connecting portion 21a. Such arrangement allows a gap L1 to be present between a side of the blocking portion of the sleeve 26 close to the mounting portion 1 and a side of the first limiting portion 214 away from the mounting portion 1. This gap L1 allows the first limiting portion 214 to also have a movable space in the axial direction of the first connecting portion 21a, so as to adapt to axial floating during the assembly process.

Two first limiting portions 214 are provided. The two first limiting portions 214 are symmetrically connected to two sides of the first connecting portion 21a.

The first limiting portion 214 can implement rough positioning of the first connecting portion 21a and the mounting portion 1 and allow the first connecting portion 21a and the mounting portion 1 to have movable space in the radial direction, so as to adapt to the floating connection of the flange structure 2 in the radial direction.

The first sealing member 22 includes a support frame 221, a first sealing portion 222, and a second limiting portion 223.

The support frame 221 is configured to support the first sealing portion 222. The first sealing portion 222 may be made of a soft material with a good sealing effect, such as rubber. In the radial direction of the first connecting portion 21a, the first sealing portion 222 is movable relative to the support frame 221, so that when water inlet and outlet nozzles are connected to mating parts, manufacturing or assembly errors can be overcome through the radial movement of the first sealing portion 222 relative to the support frame 221, reducing the radial forces on the water inlet and outlet nozzles and the mating parts.

As shown in FIG. 8, the support frame 221 is overall in a circular ring shape. A cross-section of the support frame 221 is roughly T-shaped. The support frame 221 can be made of a plastic material. The first sealing portion 222 is wrapped on an outer side of a top of the support frame 221.

A sealing ring 27 may be provided on the top of the support frame 221. The sealing ring 27 presses against an inner wall of the housing of the battery 100 or other sealing surfaces inside the housing to achieve sealing between the support frame 221 and the inner wall of the housing or the other sealing surfaces inside the housing. The sealing ring 27 may be a rubber ring.

The second limiting portion 223 is provided on the support frame 221. The first sealing member 22 is connected to the mounting portion 1 through the second limiting portion 223.

A second connecting hole 224 is provided on the second limiting portion 223. The first connecting member 24 passes through the second connecting hole 224 and a fourth connecting hole provided on the mounting portion 1 to achieve fixed connection between the support frame 221 and the mounting portion 1.

Four second limiting portions 223 are provided. The four second limiting portions 223 are evenly connected to the support frame 221 along a circumferential direction. As shown in FIG. 4, two second limiting portions 223 are respectively located on two sides of the second connecting portion 21b, and two second limiting portions 223 are respectively located on two sides of the first limiting portion 214.

The second sealing member 23 includes a second sealing portion 231, a first insertion portion 232, and a second insertion portion 233.

As shown in FIG. 7, the second sealing portion 231 and the first connecting section 211 are in interference fit and are welded at a welding portion 230 to form a first seal. The protruding portion 212 of the first connecting portion 21a is in interference fit with the first sealing portion 222 of the first sealing member 22 to form a second seal. Therefore, two seals are formed on the first connecting portion 21a through the first sealing member 22 and the second sealing member 23 in the flange structure 2, so that the double sealing effect is achieved. When one seal deteriorates or fails, the sealing effect can still be maintained through another seal.

A portion of the first sealing portion 222 cooperating with the first connecting portion 21a is provided with a first accommodating portion 2221 and a second accommodating portion 2222. The first accommodating portion 2221 extends along the radial direction of the first connecting portion 21a. The second accommodating portion 2222 extends along an axial direction of the first connecting portion 21a.

The first insertion portion 232 of the second sealing member 23 extends along the radial direction of the first connecting portion 21a. The second insertion portion 233 extends along the axial direction of the first connecting portion 21a.

The first insertion portion 232 is inserted into the first accommodating portion 2221, and the second insertion portion 233 is inserted into the second accommodating portion 2222, so that the cooperation stability and reliability between the first sealing member 22 and the second sealing member 23 can be improved, the difficulty of separation between the first sealing member 22 and the second sealing member 23 can be increased, and the correlation between the two seals can be improved.

For the first embodiment, during assembly, first, the first sealing member 22 is sleeved on the first connecting section 211 of the first connecting portion 21a, and the protruding portion 212 is in interference fit with the first sealing portion 222; then, the second sealing member is sleeved on the first connecting portion 21a by cold pressing, the first insertion portion 232 is inserted into the first accommodating portion 2221, and the second insertion portion 233 is inserted into the second accommodating portion 2222; and after assembly, the welded connection between the second sealing member 23 and the first connecting portion 21a is completed by laser welding.

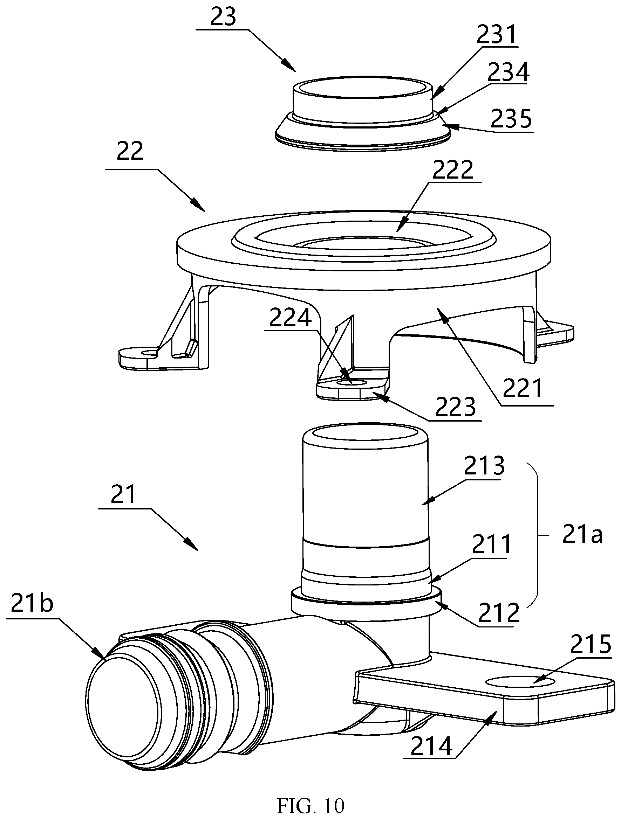

In a second embodiment shown in FIG. 9 to FIG. 13, as shown in FIG. 9 and FIG. 10, the structure of the first connecting portion 21a is basically the same as that in the first embodiment. A diameter of the protruding portion 212 is larger than a diameter of the first connecting section 211, so that a step surface 2121 is formed on a side of the protruding portion 212 close to the first connecting section 211.

In the second embodiment, the difference of the first sealing member 22 is that, as shown in FIG. 11 and FIG. 12, the first accommodating portion 2221 and the second accommodating portion 2222 are not provided on the first sealing portion 222, but the first sealing portion 222 is provided with a second mating surface 2223, a fourth mating surface 2224, a first sealing surface 2225, and a second sealing surface 2226.

In the second embodiment, the difference of the second sealing member 23 is that the first insertion portion 232 and the second insertion portion 233 are not provided on the second sealing member 23, but the second sealing member 23 is provided with a first pressing portion 234 and a second pressing portion 235. The first pressing portion 234 and the second pressing portion 235 both press against an outer side of the first sealing portion 222 to apply pressure to the first sealing portion 222 and enable the first sealing portion 222 to abut against an outer surface 2111 of the first connecting portion 21a, thereby improving the sealing effect.

In a direction away from the second sealing portion 231, the first pressing portion 234 is inclined away from the axis of the first connecting portion 21a. The second pressing portion 235 is perpendicular to the axis of the first connecting portion 21a.

The first pressing portion 234 includes a first mating surface 2341. The second pressing portion 235 includes a third mating surface 2351. The first mating surface 2341 is in contact with the second mating surface 2223. The third mating surface 2351 is in contact with the fourth mating surface 2224. The first sealing surface 2225 abuts against a step surface 2121 formed by the protruding portion 212. The second sealing surface 2226 abuts against the outer surface 2111 of the first connecting section 211 of the first connecting portion 21a, so that two seals are formed between the first sealing member 22 and the first connecting portion 21a.

The first mating surface 2341 and the second mating surface 2223 are both inclined relative to the axial direction of the first connecting portion 21a. An included angle between the first mating surface 2341 and the axis of the first connecting portion 21a is an acute angle. The third mating surface 2351 and the fourth mating surface 2224 are both perpendicular to the axis of the first connecting portion 21a.

The first sealing surface 2225 and the step surface 2121 are both annular and perpendicular to the axis of the first connecting portion 21a. The second sealing surface 2226 and the outer surface 2111 of the first connecting section 211 are both annular and extend along the axial direction of the first connecting portion 21a.

Through the cooperation of the first pressing portion 234 and the second pressing portion 235 with the first sealing portion 222, an axial force and a radial force can be applied to the first sealing portion 222 simultaneously, thereby achieving double sealing in the axial direction and the radial direction.

For the second embodiment, during assembly, first, the first sealing member 22 is sleeved on the first connecting section 211 of the first connecting portion 21a, and a preliminary seal is formed between the protruding portion 212 and the first sealing member 22 and the first sealing portion 222; then, the second sealing member is sleeved on the first connecting portion 21a; and after assembly, the first pressing portion 234 is snap-fitted on the outer side of the first sealing portion 222 to apply inclined pressure to the first sealing portion 222, and this force can be decomposed to apply the axial force and the radial force to the first sealing portion 222 simultaneously; and the second pressing portion 235 is snap-fitted on the top of the first sealing portion 222 to apply the axial force to the first sealing portion 222. Under the action of the first pressing portion 234 and the second pressing portion 235, an interference fit can be formed between the first sealing member 22 and the first connecting portion 21a in both the axial direction and the radial direction, thereby achieving secondary sealing. Moreover, after installation, a substantially enclosed space is formed between the second sealing member 23 and the first connecting portion 21a, making it difficult for the first sealing member 22 to separate from this space, thereby ensuring good adhesion between the first sealing member 22 and the first connecting portion 21a, and enhancing the sealing effect.

The description of the foregoing embodiments tends to emphasize the differences between the embodiments, and their identical or similar aspects may be referred to each other. For brevity, details are not described herein again.

Although this disclosure has been described with reference to preferred embodiments, various improvements can be made thereto without departing from the scope of this disclosure, and equivalent elements can be used to replace components therein. In particular, as long as there is no structural conflict, the various technical features mentioned in the embodiments can be combined in any manner. This disclosure is not limited to the specific embodiments disclosed herein, but includes all technical solutions falling within the scope of the claims.

## Claims

1. A battery (100), comprising:
a mounting portion (1) provided with a mounting hole; and
a flange structure (2) comprising a first connecting portion (21a), a first sealing member (22), and a second sealing member (23), wherein the first connecting portion (21a) is movably disposed in the mounting hole; the first sealing member (22) is sleeved on a periphery of the first connecting portion (21a), and the first sealing member (22) is connected to the mounting portion (1); and the second sealing member (23) is sleeved on the periphery of the first connecting portion (21a), and the second sealing member (23) cooperates with the first sealing member (22) to enhance a sealing effect between the first sealing member (22) and the first connecting portion (21a).

2. The battery (100) according to claim 1, wherein the first sealing member (22) comprises a first sealing portion (222), and the first sealing portion (222) is in interference fit with the first connecting portion (21a).

3. The battery (100) according to claim 1 or 2, wherein the first sealing member (22) comprises a first sealing portion (222), a protruding portion (212) is provided on the periphery of the first connecting portion (21a), and the first sealing portion (222) is in interference fit with the protruding portion (212).

4. The battery (100) according to any one of claims 1 to 3, wherein the second sealing member (23) comprises a second sealing portion (231), and the second sealing portion (231) is in interference fit with the first connecting portion (21a).

5. The battery (100) according to any one of claims 1 to 4, wherein the second sealing member (23) comprises a second sealing portion (231), and the second sealing portion (231) is welded to the first connecting portion (21a).

6. The battery (100) according to any one of claims 1 to 5, wherein the first sealing member (22) is provided with an accommodating groove, the second sealing member (23) comprises an insertion portion, and the insertion portion is inserted into the accommodating groove.

7. The battery (100) according to claim 6, wherein the accommodating groove comprises a first accommodating portion (2221) and a second accommodating portion (2222); the insertion portion comprises a first insertion portion (232) and a second insertion portion (233); the first insertion portion (232) is inserted into the first accommodating portion (2221); and the second insertion portion (233) is inserted into the second accommodating portion (2222).

8. The battery (100) according to claim 7, wherein a preset included angle is provided between the first accommodating portion (2221) and the second accommodating portion (2222), and a preset included angle is provided between the first insertion portion (232) and the second insertion portion (233).

9. The battery (100) according to claim 7 or 8, wherein the first accommodating portion (2221) and the second accommodating portion (2222) are perpendicular to each other, and the first insertion portion (232) and the second insertion portion (233) are perpendicular to each other.

10. The battery (100) according to any one of claims 7 to 9, wherein the first accommodating portion (2221) and the first insertion portion (232) both extend along a radial direction of the first connecting portion (21a); and the second accommodating portion (2222) and the second insertion portion (233) both extend along an axial direction of the first connecting portion (21a).

11. The battery (100) according to any one of claims 1 to 5, wherein the second sealing member (23) comprises a first pressing portion (234), the first pressing portion (234) is sleeved on a periphery of the first sealing member (22), and the first pressing portion (234) is configured to enable the first sealing member (22) to abut against the first connecting portion (21a) along an axial direction and/or a radial direction of the first connecting portion (21a).

12. The battery (100) according to claim 11, wherein the first pressing portion (234) comprises a first mating surface (2341) inclined relative to the axial direction of the first connecting portion (21a); the first sealing member (22) comprises a second mating surface (2223) inclined relative to the axial direction of the first connecting portion (21a); and the first mating surface (2341) is in contact with the second mating surface (2223).

13. The battery (100) according to claim 11 or 12, wherein the first connecting portion (21a) comprises a first connecting section (211) and a protruding portion (212); the protruding portion (212) protrudes outward along a radial direction relative to an outer surface (2111) of the first connecting section (211) to form a step surface (2121); the first sealing member (22) comprises a first sealing surface (2225) and a second sealing surface (2226); and the first pressing portion (234) is configured to press the first sealing surface (2225) against the step surface (2121) and/or press the second sealing surface (2226) against the outer surface (2111) of the first connecting section (211).

14. The battery (100) according to any one of claims 1 to 5, wherein the second sealing member (23) comprises a second pressing portion (235), and the second pressing portion (235) is configured to enable the first sealing member (22) to abut against the first connecting portion (21a) along an axial direction of the first connecting portion (21a).

15. The battery (100) according to claim 14, wherein the second pressing portion (235) comprises a third mating surface (2351) perpendicular to an axis of the first connecting portion (21a); the first sealing member (22) comprises a fourth mating surface (2224) perpendicular to the axis of the first connecting portion (21a); and the third mating surface (2351) is in contact with the fourth mating surface (2224).

16. The battery (100) according to claim 14 or 15, wherein the first connecting portion (21a) comprises a first connecting section (211) and a protruding portion (212); the protruding portion (212) protrudes outward along a radial direction relative to an outer surface (2111) of the first connecting section (211) to form a step surface (2121); the first sealing member (22) comprises a first sealing surface (2225); and the second pressing portion (235) is configured to press the first sealing surface (2225) against the step surface (2121).

17. An electric device, comprising the battery (100) according to any one of claims 1 to 16, wherein the battery (100) is configured to supply electrical energy to the electric device.
